Europäisches Patentamt

European Patent Office

Office européen des brevets

(11) Numéro de publication : **0 334 732 B1**

# (12) FASCICULE DE BREVET EUROPEEN

(45) Date de publication du fascicule du brevet :
**30.09.92 Bulletin 92/40**

(51) Int. Cl.$^5$ : **C01G 25/02,** C01G 25/04

(21) Numéro de dépôt : **89400755.8**

(22) Date de dépôt : **17.03.89**

---

(54) **Nouveau dérivé réactif du zirconium et sa préparation.**

---

(30) Priorité : **22.03.88 FR 8803679**

(43) Date de publication de la demande :
**27.09.89 Bulletin 89/39**

(45) Mention de la délivrance du brevet :
**30.09.92 Bulletin 92/40**

(84) Etats contractants désignés :
**AT BE DE FR GB IT**

(56) Documents cités :
**US-A- 2 837 400**
**US-A- 3 254 949**
**US-A- 4 719 091**
**CHEMICAL ABSTRACTS, vol. 97, no. 24,**
**décembre 1982, page 628, résumé no.**
**207102h, Columbus, Ohio, US; T. JIANG:**
**"Preparationand properties of zirconium**
**oxide chloride".**

(73) Titulaire : **SOCIETE EUROPEENNE DES
PRODUITS REFRACTAIRES
Les Miroirs 18, Avenue d'Alsace
F-92400 Courbevoie (FR)**

(72) Inventeur : **Recasens, Joseph
24 rue Saint Hubert
F-84700 Sorgues (FR)**
Inventeur : **Urffer, Daniel
5 rue Paul Signac
F-84310 Morières les Avignon (FR)**
Inventeur : **Ferlanda, Pierre
Route de Carpentras
F-84130 Le Pontet (FR)**

(74) Mandataire : **Colas, Jean-Pierre et al
Cabinet de Boisse 37, avenue Franklin D.
Roosevelt
F-75008 Paris (FR)**

# Description

L'invention concerne un nouveau dérivé réactif du zirconium et sa préparation.

On désigne par l'appellation "dérivé réactif du zirconium", un composé du zirconium qui se trouve en solution dans un solvant aqueux ou organique on peut être dissous dans un tel solvant. Le dérivé réactif du zirconium peut réagir à l'état dissous avec d'autres composés.

On connaît de nombreux dérivés réactifs du zirconium. Parmi ceux-ci, les plus communément utilisés dans l'industrie sont les suivants :

le carbonate basique de zirconium ($CO_2/ZrO_2 \simeq 0,5$) contenant 40% en poids de $ZrO_2$, sous forme de pâte humide,

l'orthosulfate de zirconium (sulfate/$ZrO_2 \simeq 2$) soit sous forme de solution aqueuse (contenant 18% en poids de $ZrO_2$), soit sous forme de solide cristallisé (contenant 32% en poids de $ZrO_2$),

l'oxychlorure de zirconium (chlorure/$ZrO_2 \simeq 2$) soit sous forme de solution aqueuse (contenant 20% en poids de $ZrO_2$), soit sous forme de solide cristallisé (contenant 33% en poids de $ZrO_2$),

le sulfate basique de zirconium (sulfate/$ZrO_2 \simeq 0,6$ à 1) sous forme de pâte humide (contenant 37% en poids de $ZrO_2$),

le nitrate de zirconium sous forme de solution aqueuse (contenant 19% en poids de $ZrO_2$) ou de solide (contenant 40% en poids de $ZrO_2$),

l'acétate de zirconium en solution (contenant 22% en poids de $ZrO_2$),

l'hydroxyde de zirconium (contenant 42% en poids de $ZrO_2$), et

le carbonate de zirconium et d'ammonium en solution (contenant 13% en poids de $ZrO_2$).

On connaît aussi de nombreux dérivés organiques du zirconium (propionate, lactate, acétylacétonate, alcoolates divers) dont la teneur en $ZrO_2$ va de 6 à15% en poids.

Ces matières sont utilisées telles quelles (cas des dérivés en solution), soit doivent être dissoutes par réaction avec une solution, en général acide, par l'utilisateur final (cas des dérivés solides ou en pâte).

En pratique, on ne tire parti, en général, que du zirconium contenu dans les matières sus-mentionnées et non des anions (par exemple chlorure, carbonate, sulfate, nitrate ou acétate) et/ou de l'eau qui forment pourtant la majeure partie de ces matières et dont le rôle est essentiellement de maintenir le zirconium sous une forme soluble. Les anions et/ou l'eau ne participent pas directement aux réactions impliquées dans les applications pratiques de ces matières et sont, en fait, plutôt néfastes. En effet, les solutions des composés du zirconium sont corrosives et toxiques ce qui pose des problèmes de stockage et de transport, et les pâtes à base de composés de zirconium sont hétérogènes du fait de la présence d'eau libre et difficiles à manipuler. Par ailleurs, certains anions (notamment les sulfates et chlorures) ou l'eau peuvent contrarier les réactions recherchées, par exemple lors de la production de siccatifs du type savons de zirconium. Enfin, sur le plan économique, il est peu avantageux de transporter des matières contenant relativement peu de matière active ($ZrO_2$) et de devoir employer des récipients onéreux capables de résister à la corrosion, dans le cas des matières sous forme de solutions ou de pâtes.

Il est donc intéressant de pouvoir disposer de dérivés réactifs du zirconium à teneur élevée en $ZrO_2$, qui soient des matières solides contenant un minimum d'impuretés et d'eau.

L'invention a pour objet de fournir de tels dérivés réactifs du zirconium.

Plus particulièrement, l'invention concerne des dérivés réactifs du zirconium caractérisés en ce qu'ils sont sous la forme d'un solide blanc pulvérulent non cristallisé et d'aspect sec, soluble dans une solution aqueuse d'un acide, et sont constitués d'acide méta-zirconique $ZrO(OH)_2$ accompagné d'eau libre ou faiblement liée, une partie des ions OH⁻ étant remplacée par des ions halogénures, la teneur en $ZrO_2$ de ces dérivés étant de 60 à 92% en poids inclusivement, de préférence de 75 à 86,5% en poids, et la teneur en eau de ces dérivés allant de 3 à 39,98%, de préférence 13 à 25%, et la teneur en ions halogénures de ces dérivés allant de 0,02 à 5% en poids environ.

Une classe de dérivés préférés est celle des dérivés contenant en poids 75 à 86,5% de $ZrO_2$, 13 à 25% d'eau et au plus 0,5% environ d'ions halogénures, en particulier des ions Cl⁻. Une autre classe de dérivés préférés est celle des dérivés contenant, en poids, moins de 13% d'eau et plus de 0,5% d'ions halogénures, en particulier des ions Cl⁻.

L'invention concerne également un procédé de préparation de dérivés réactifs du zirconium sus-mentionnés, caractérisé en ce qu'il comprend les étapes consistant à :

a) préparer de la zircone hydratée $ZrO_2 .2H_2O$ ou hydroxyde de zirconium $Zr(OH)_4$ riche en eau,

b) remplacer une partie des ions OH⁻ du produit de l'étape (a) par des ions halogénures, et

c) déshydrater partiellement, de façon contrôlée, le produit de l'étape (b) par chauffage à une température d'au plus 130°C jusqu'à l'obtention d'un solide blanc pulvérulent non cristallisé et d'aspect sec, soluble dans une solution aqueuse d'un acide.

La première étape (a) consiste à préparer de la zircone hydratée $ZrO_2 .2H_2O$, appelée aussi hydroxyde de zirconium $Zr(OH)_4$ riche en eau. Par "riche en eau", on veut dire un produit contenant au moins 45% en poids au total (eau libre + eau liée). Cette étape peut s'effectuer de diverses manières, comme par exemple :

– Neutralisation d'une solution aqueuse acide d'un sel de Zr (par exemple l'oxychlorure, le nitrate, l'acétate), par une base (par exemple la soude, l'ammoniaque), suivie d'une filtration et du lavage du gâteau de filtration. On obtient ainsi un précipité de zircone hydratée ou hydroxyde de zirconium volumineux et riche en eau (90% et plus). Cette méthode présente l'avantage de fournir un produit pur débarrassé des impuretés éventuellement présentes dans le sel de départ.

– Hydrolyse d'un sel organique de zirconium en solution dans l'eau ou un mélange eau-alcool, suivie d'une filtration et d'un lavage du gâteau de filtration. Cette méthode n'est cependant, pas la plus intéressante sur le plan économique car il faut disposer d'un sel organique de Zr.

– Déplacement d'ions d'un sel basique de Zr solide par un réactif en solution aqueuse ou de l'eau, selon le cas, suivi d'une filtration et de lavages du gâteau de filtration. Comme sel basique de Zr, on peut utiliser, par exemple, un sulfate "basique" de Zr (réactif, base en solution aqueuse) ou un zirconate de métal alcalin tel que le zirconate de sodium (réactif : eau). Cette méthode est la méthode préférée du point de vue du coût. Elle permet aussi d'obtenir un dérivé réactif du zirconium à teneur réduite en eau libre ou faiblement liée. Elle présente l'inconvénient éventuel de laisser dans le produit des teneurs résiduelles assez élevées en sulfates (dans le cas d'un sulfate basique de Zr) ou en oxydes alcalins (cas d'un zirconate de métal alcalin). Toutefois, lorsqu'on met en oeuvre l'étape (b), les oxydes alcalins se trouvent pratiquement éliminés.

L'étape (b) de substitution partielle des ions $OH^-$ du produit de l'étape (a) par des ions halogénures permet d'obtenir des dérivés réactifs du zirconium à plus hautes teneurs en $ZrO_2$. Cette étape peut être conduite en lavant le produit de l'étape (a) avec une solution aqueuse de l'acide halogénhydrique correspondant. Dans le cas d'un lavage à l'acide chlorhydrique ayant pour but de substituer des ions $Cl^-$ aux ions $OH^-$, on peut atteindre une teneur en ions $Cl^-$ de l'ordre de 5% en poids, mais on peut ajuster la teneur finale en procédant à un second lavage à l'aide d'ammoniaque, par exemple. Dans le cas où le produit de l'étape (a) a été obtenu par déplacement d'ions à partir d'un zirconate de métal alcalin tel que le zirconate de Na, on peut opérer la substitution des ions $OH^-$ par des ions halogénures, par exemple $Cl^-$, par un lavage du produit de l'étape (a) par une solution aqueuse d'halogénure d'ammonium, par exemple de chlorure d'ammonium, éventuellement acidifiée par de l'acide chlorhydrique. On déplace ainsi le sodium résiduel par une quantité de Cl contrôlable par ajustement du pH de la solution de lavage. Un lavage subséquent par un autre acide permet de fixer les anions correspondants, même si ceux-ci ne participent pas à la stabilité (cas du lavage par $HNO_3$ dans l'exemple 5).

L'étape de déshydratation contrôlée (c) peut aussi s'effectuer de diverses façons. Cette déshydratation peut être réalisée par simple chauffage du produit de l'étape (b) dans une étuve à une température d'au plus 130°C, pour une humidité atmosphérique relative de 50 à 70.%. La déshydratation commence dès 30°C, mais est lente à cette température. On opérera, de préférence, entre 80 et 110°C. Evidemment, le degré de déshydratation obtenu variera avec la température utilisée et le degré de chauffage. on peut également réaliser la déshydratation par chauffage à l'aide de micro-ondes. Ce mode de chauffage est très efficace et rapide. Il faut, en tout cas, éviter un chauffage trop sévère qui entraînerait la décomposition de $ZrO(OH)_2$ avec production de zircone insoluble (c'est-à-dire de zircone cristallisé) et d'eau.

Les dérivés réactifs du zirconium de l'invention sont facilement convertibles en dérivés réactifs du zirconium usuels. Il suffit de dissoudre les dérivés de l'invention dans une solution aqueuse d'un acide, par exemple d'acide chlorhydrique pour obtenir de l'oxychlorure de zirconium, d'acide nitrique pour obtenir du nitrate de zirconium, etc... La solubilité élevée des dérivés de l'invention peut être attribuée à la présence d'ions zirconyle $ZrO^{2+}$.

Les dérivés réactifs du zirconium de l'invention sont remarquablement stables. Après un séjour de 15 jours à 80°C, leur solubilité dans une solution d'acide chlorhydrique reste supérieure à 95%, alors qu'elle n'est plus que de 50% dans le cas du carbonate basique de zirconium.

Selon leur pureté, les dérivés de l'invention sont utilisables, en tant que source de Zr, dans des applications industrielles variées. On peut citer, à titre indicatif:

– le traitement de pigments à base de $TiO_2$, le dérivé de l'invention étant dissous in situ en milieu chlorhydrique ou sulfurique,

– le traitement de formations pétrolières,le dérivé de l'invention pouvant être dissous sur place dans de l'acide chlorhydrique.

Les exemples non limitatifs suivants sont donnés en vue d'illustrer l'invention.

## Exemple 1

On mélange 55 parties en poids de zircone (oxyde naturel dit baddeléyite ou thermique) d'une grosseur moyenne de particules de 0,6 à 15 μm avec 45 parties en poids de NaOH sous forme de pastilles solides ou de solution aqueuse concentrée. On chauffe le mélange à 850°C pendant 1 heure pour obtenir après refroidissement, un mélange solide de zirconate de sodium et de soude en excès. On met en contact ce mélange avec de l'eau à 60°C sous agitation (rapport en poids eau/mélange: 2,5/l). On filtre la suspension obtenue, puis on lave le résidu de filtration dans un courant d'eau (rapport en poids eau/produit:20/1).

On lave le produit obtenu à l'aide d'une solution aqueuse de HCl O,1N (rapport en poids solution/produit:30/1), puis à l'eau (rapport en poids eau/produit:5/1). On déshydrate ensuite la pâte humide obtenue pendant 24 heures à 40°C sous 50-70% d'humidité relative. Le produit solide pulvérulent finalement obtenu contient en poids environ 75% de ZrO$_2$, 20% de H$_2$O, 5% de Cl$^-$ et moins de 0,5 % d'impuretés diverses.

## Exemple 2

On répète le mode opératoire de l'exemple 1 jusqu'au premier lavage à l'eau du résidu de filtration inclus. On lave ensuite le produit obtenu par une solution concentrée (100 g/l) de chlorure d'ammonium (rapport en poids solution de ClNH$_4$/produit:3/1) puis par de l'eau(rapport en poids eau/produit:5/1). On déshydrate ensuite le produit résultant par chauffage à 80°C pendant 6 heures sous 50-70% d'humidité relative. Le produit solide pulvérulent finalement obtenu contient en poids 84% de ZrO$_2$, 15% de H$_2$O, 0,5% de Cl$^-$ et environ, 0,5% d'impuretés (principalement du Na$_2$O).

## Exemple 3

On répète le mode opératoire de l'exemple 1 jusqu'au premier lavage à l'eau du résidu de filtration inclus. On déshydrate ensuite le produit à 80°C pendant 12 heures sous 50-70% d'humidité relative. Le produit solide pulvérulent finalement obtenu contient en poids 82% de ZrO$_2$, 13% d'H$_2$O et 5% de Cl$^-$ et moins de 0,5% d'impuretés (principalement du Na$_2$O).

## Exemple 4

On met en suspension 1 kg de sulfate basique de zirconium, obtenu comme décrit par F. Farnworth, S.L. Jones, I. McAlpine, "The production, properties and use of zirconium chemicals", Special Publication of the Royal Soc. of Chemistry, N° 40, p. 259 (1981), dans 9 litres de solution 0,1N d'ammoniaque. Le pH du mélange obtenu est de 7 environ. Après agitation à 25°C, on filtre le produit et on lave le gâteau de filtration avec 5 litres d'eau. Le produit obtenu est ensuite séché à 80°C pendant 12 heures sous 50-70% d'humidité relative. Le produit solide finalement obtenu contient en poids 82% de ZrO$_2$, 13% d'H$_2$O et 5% d'impuretés (principalement des ions sulfate). Il est à noter que l'ammoniaque pourrait être remplacée par une autre base.

## Exemple 5

On répète le mode opératoire de l'exemple 1 jusqu'au premier lavage à l'eau du résidu de filtration inclus. On lave le produit obtenu à l'aide d'une solution aqueuse 0,1N d'acide nitrique (rapport en poids solution acide/ produit : 30/1). On déshydrate ensuite le produit à 80°C pendant 12 heures sous 50-70% d'humidité relative. Le produit solide pulvérulent finalement obtenu contient en poids 82% de ZrO$_2$, 13% d'H$_2$O et 5% d'impuretés (principalement des ions nitrate).

## Exemple 6

On répète le mode opératoire de l'exemple 1 jusqu'au lavage à l'acide chlorhydrique inclus. On déshydrate ensuite le produit à 120°C pendant 12 heures sous 50-70% d'humidité relative. Le produit solide pulvérulent finalement obtenu contient en poids environ 92% de ZrO$_2$, 3% d'H$_2$O, 5% de Cl$^-$ et moins de 0,5% d'impuretés.

## Exemple 7 Préparation d'une solution d'oxchlorure de zirconium à 20% de ZrO$_2$

On ajoute le produit de l'exemple 2 à une solution aqueuse d'acide chlorhydrique à 37% en quantités telles que le rapport molaire $\dfrac{Cl}{ZrO_2}$ soit égal à 2 environ; on chauffe le tout à 100°C pendant 30 minutes, puis on ajoute de l'eau pour ajuster la densité de la solution résultante à 1,37, et on refroidit à la température ambiante.

## Exemple 8 Préparation d'une solution de nitrate de zirconium à 20% de ZrO$_2$

On ajoute le produit de l'exemple 2 à une solution aqueuse d'acide nitrique à 65% en quantités telles que le rapport molaire NO$_3$/ZrO$_2$ soit égal à 2 environ et que la proportion de ZrO$_2$ soit de 20% en poids environ. On chauffe le tout à 80°C pendant 1 heure, puis on refroidit à la température ambiante.

## Revendications

1. Dérivés réactifs de zirconium caractérisés en ce qu'ils sont sous la forme d'un solide blanc pulvérulent non cristallisé et d'aspect sec, soluble dans une solution aqueuse d'un acide, et sont constitués d'acide métazirconique ZrO(OH)$_2$ accompagné d'eau libre ou faiblement liée, une partie des ions OH$^-$ étant remplacée par des ions halogénures, la teneur en ZrO$_2$ de ces dérivés étant de 60 à 92% en poids inclusivement, la teneur en eau de ces dérivés allant de 3 à 39,98%, et la teneur en ions halogénures de ces dérivés allant de 0,02 à 5% en poids environ.

2. Dérivés réactifs du zirconium selon la revendication 1, caractérisés en ce qu'ils contiennent en poids 75 à 86,5% de $ZrO_2$, 13 à 25% d'eau et au plus 0,5% environ d'ions halogénures.

3. Dérivés réactifs du zirconium selon la revendication 1, caractérisés en ce qu'ils contiennent plus de 0,5% en poids d'ions halogénures et une proportion d'eau inférieure à 13% en poids.

4. Dérivés selon la revendication 1, caractérisés en ce que les ions halogénures sont des ions $Cl^-$.

5. Procédé de préparation d'un dérivé réactif du zirconium, caractérisé en ce qu'il comprend les étapes consistant à :
   a) préparer de la zircone hydratée $ZrO_2 .2H_2O$ ou hydroxyde de zirconium $ZR(OH)_4$ riche en eau,
   b) remplacer une partie des ions $OH^-$ du produit de l'étape (a) par des ions halogénures, et
   c) déshydrater partiellement, de façon contrôlée, le produit de l'étape (b) par chauffage à une température d'au plus 130°C jusqu'à l'obtention d'un solide blanc pulvérulent non cristallisé et d'aspect sec, soluble dans une solution aqueuse d'un acide.

6. Procédé selon la revendication 5, caractérisé en ce qu'on effectue l'étape (a) par déplacement d'ions d'un sel basique de Zr solide par un réactif en solution aqueuse ou de l'eau, selon le cas, suivi d'une filtration et de lavages du gâteau de filtration.

7. Procédé selon la revendication 6, caractérisé en ce que le sel basique de Zr est un sulfate basique de Zr et le réactif en solution aqueuse est une solution aqueuse d'une base.

8. Procédé selon la revendication 6, caractérisé en ce que le sel basique de Zr est un zirconate de métal alcalin et le réactif est de l'eau.

9. Procédé selon la revendication 5, caractérisé en ce qu'on effectue l'étape (a) par neutralisation d'une solution aqueuse acide d'un sel de zirconium par une base, suivie d'une filtration et du lavage du gâteau de filtration.

10. Procédé selon la revendication 5, caractérisé en ce qu'on effectue l'étape (b) par lavage du produit de l'étape (a) à l'aide d'une solution aqueuse d'un acide halogénhydrique ou d'un halogénure d'ammonium.

11. Procédé selon la revendication 10, caractérisé en ce qu'on effectue l'étape (b), en lavant le produit de l'étape (a) avec une solution aqueuse d'acide chlorhydrique ou de chlorure d'ammonium.

12. Procédé selon la revendication 5, caractérisé en ce que le chauffage est effectué à l'aide de micro-ondes.

**Patentansprüche**

1. Reaktive Zirconium-Derivate, dadurch gekennzeichnet, daß diese in Form eines weißen pulverförmigen nichtkristallinen Feststoffs von trockenem Aussehen vorliegen, der löslich ist in einer wäßrigen Lösung einer Säure, und die aus Metazirconium(IV)-hydroxid $ZrO(OH)_2$ nebst freiem oder schwach gebundenem Wasser bestehen, wobei ein Teil der $OH^-$-Ionen durch Halogenid-Ionen ersetzt ist, der $ZrO_2$-Gehalt dieser Derivate 60 bis 92 Gew.-% beträgt, der Wassergehalt dieser Derivate sich auf 3 bis 39,98% beläuft, und der Gehalt an Halogenid-Ionen dieser Derivate sich auf etwa 0,02 bis 5 Gew.-% beläuft.

2. Reaktive Zirconium-Derivate nach Anspruch 1, dadurch gekennzeichnet, daß sie gewichtsbezogen 75 bis 86,5% $ZrO_2$, 13 bis 25% Wasser und höchstens etwa 0,5% Halogenid-Ionen enthalten.

3. Reaktive Zirconium-Derivate nach Anspruch 1, dadurch gekennzeichnet, daß sie mehr als 0,5 Gew.-% Halogenid-Ionen sowie einen Anteil Wasser von weniger als 13 Gew.-% enthalten.

4. Reaktive Zirconium-Derivate nach Anspruch 1, dadurch gekennzeichnet, daß die Halogenid-Ionen $Cl^-$-Ionen sind.

5. Verfahren zur Herstellung eines reaktiven Zirconium-Derivats, dadurch gekennzeichnet, daß es die Schritte umfaßt, bestehend aus:
   a) Herstellung von hydratisiertem Zirconiumoxid $ZrO_2 ·2H_2O$ oder wasserreichem Zirconiumhydroxid $Zr(OH)_4$,
   b) Ersetzen eines Teils der $OH^-$-Ionen im Produkt von Schritt (a) durch Halogenid-Ionen, und
   c) teilweise, kontrollierte Dehydratisierung des Produkts von Schritt (b) durch Erhitzen auf eine Temperatur von höchstens 130°C, bis ein weißer pulverförmiger nichtkristalliner Feststoff von trockenem Aussehen erhalten wird, der löslich ist in einer wäßrigen Lösung einer Säure.

6. Verfahren nach Anspruch 5, dadurch gekennzeichnet, daß Schritt (a) durchgeführt wird durch Ersetzung von Ionen eines basischen festen Zr-Salzes mit Hilfe eines Reagens in wäßriger Lösung oder, je nachdem, mit Wasser, gefolgt von Filtration und Waschungen des Filterkuchens.

7. Verfahren nach Anspruch 6, dadurch gekennzeichnet, daß das basische Zr-Salz ein basisches Zr-Sulfat und das Reagens in wäßriger Lösung eine wäßrige Lösung einer Base ist.

8. Verfahren nach Anspruch 6, dadurch gekennzeichnet, daß das basische Zr-Salz ein Alkalimetall-zirconat und das Reagens Wasser ist.

9. Verfahren nach Anspruch 5, dadurch gekennzeichnet, daß Schritt (a) durchgeführt wird durch Neutralisation einer sauren wäßrigen Lösung eines Zirconium-Salzes mit Hilfe einer Base, gefolgt von Filtration und Waschen des Filterkuchens.

10. Verfahren nach Anspruch 5, dadurch gekennzeichnet, daß Schritt (b) durchgeführt wird durch Waschen des Produkts von Schritt (a) mit Hilfe einer wäßrigen Lösung einer Halogenwasserstoffsäure oder eines Ammoniumhalogenids.

11. Verfahren nach Anspruch 10, dadurch gekennzeichnet, daß Schritt (b) durchgeführt wird durch Waschen des Produkts von Schritt (a) mit einer wäßrigen Lösung von Chlorwasserstoffsäure oder Ammoniumchlorid.

12. Verfahren nach Anspruch 5, dadurch gekennzeichnet, daß das Erhitzen mit Hilfe von Mikrowellen durchgeführt wird.

**Claims**

1. Reactive derivatives of zirconium, characterized in that they are in the form of a pulverulent white solid which is not crystallized and dry in appearance, soluble in an aqueous solution of an acid, and consist of metazirconic acid $ZrO(OH)_2$ accompanied by free or weakly bound water, wherein some of the OH$^-$ ions have been replaced by halide ions, the $ZrO_2$ content of these derivatives being from 60 to 92 % by weight inclusive, the water content of these derivatives ranging from 3 to 39.98 %, and the halide ion content of these derivatives ranging from 0.02 % to approximately 5 % by weight.

2. Reactive derivatives of zirconium according to claim 1, characterized in that they contain, on a weight basis, 75 to 86.5 % of $ZrO_2$, 13 to 25 % of water and not more than approximately 0.5 % of halide ions.

3. Reactive derivatives of zirconium according to claims 1, characterized in that they contain more than 0.5 % by weight of halide ions and a proportion of water which is lower than 13 % by weight.

4. Derivatives according to claim 1, characterized in that the halide ions are Cl$^-$ ions.

5. Process for the preparation of a reactive derivative of zirconium, characterized in that it comprises the steps consisting of :
   a) preparing water-rich zirconia hydrate $ZrO_2 .2H_2O$ or zirconium hydroxyde $Zr(OH)_4$,
   b) replacing some of the OH$^-$ ions of the product of step (a) with halide ions, and
   c) partially dehydrating, in a controlled manner, the product of step (b) by heating to a temperature of not more than 130°C until a pulverulent white solid is obtained, which is not crystallized and dry in appearance and soluble in an aqueous solution of an acid.

6. Process according to claim 5, characterized in that step (a) is performed by displacement of ions from a solid basic zr salt with a reactant in aqueous solution or water, depending on circumstances, followed by a filtration and washings of the filter cake.

7. Process according to claim 6, characterized in that the basic Zr salt is a basic Zr sulfate and the reactant in aqueous solution is an aqueous solution of a base.

8. Process according to claim 6, characterized in that the basic Zr salt is an alkaline metal zirconate and the reactant is water.

9. Process according to Claim 5, characterized in that step (a) is performed by neutralizing an acidic aqueous solution of a zirconium salt with a base, followed by filtration and washing of the filter cake.

10. Process according to claim 5, characterized in that step (b) is performed by washing the product of step (a) with an aqueous solution of a hydrohalogenic acid or an ammonium halide.

11. Process according to claim 10, characterized in that step (b) is carried out by washing the product of step (a) with an aqueous solution of hydrochloric acid or of ammonium chloride.

12. Process according to claim 5, characterized in that the heating is carried out with the aid of microwaves.